# EUROPÄISCHE PATENTSCHRIFT

(11) **EP 2 356 898 B1**
(45) Veröffentlichungstag und Bekanntmachung des Hinweises auf die Patenterteilung: **21.09.2016**
(21) Anmeldenummer: 11154484.7
(22) Anmeldetag: 15.02.2011
(51) Int. Cl.: A01F 15/08

(54) **Rundballenpresse**
Round baling press
Presse à ballots ronds

(30) Priorität: 17.02.2010 DE 102010002012
(43) Veröffentlichungstag der Anmeldung: 17.08.2011
(73) Patentinhaber: Deere & Company, Moline, IL 61265 (US)
(72) Erfinder: Beaufort, David, 70100, Arc les Gray (DE)
(74) Vertreter: Holst, Sönke

(56) Entgegenhaltungen:
- WO-A1-03/104537
- DE-A1- 10 250 425
- DE-U1-202004 003 052
- DE-U1-202006 008 868
- US-A- 3 470 928
- US-A1- 2006 154 542

## Beschreibung

Die Erfindung betrifft eine Vorrichtung zur Abdeckung eines Ballenpressraums einer Rundballenpresse, mit einem flächigen Abdeckelement aus einem in sich flexiblen Gewebe, das sich zwischen einer oberen Halterung und einer zwischen einer unteren, geschlossenen Position und einer oberen, zum Auswurf eines Rundballens geöffneten Position beweglichen Strebe erstreckt und eine damit ausgestattete Rundballenpresse.

Rundballenpressen finden Verwendung, um aus halmförmigem landwirtschaftlichen Erntegut Ballen herzustellen. Derartige Rundballenpressen weisen einen Ballenpressraum und zugehörige Pressmittel auf. Nach Fertigstellung eines Ballens schwenkt bei üblichen Rundballenpressen eine rückwärtige Tür, an der die Pressmittel abstützende oder bildende Rollen gelagert sind, nach oben, um den Ballen auszuwerfen.

Es wurden Bauformen von Rundballenpressen vorgeschlagen (EP 1 308 078 A1), die einen Träger aufweisen, der Elemente haltert, welche das riemenförmige Pressmittel im unteren Bereich des Ballenpressraums der Rundballenpresse abstützen. Der Träger ist zwischen dieser Ballenbildungsposition und einer Ballenauswurfposition verschwenkbar, in der er nach hinten und oben verschwenkt ist und eine rückwärtige Öffnung der Ballenpresse freigibt. Bei derartigen Rundballenpressen sind im rückwärtigen Bereich sich im Betrieb bewegende Elemente vorhanden, beispielsweise die Pressmittel.

Die als gattungsbildend angesehene DE 102 50 425 A1 schlägt bei einer derartigen Rundballenpresse eine rückwärtige Schutzvorrichtung in Form eines Rollos, einer Platte, einer Plane oder aus netzartig miteinander verbundenen Kettengliedern vor. Die Schutzvorrichtung ist mit ihrem oberen Ende an Rahmenauslegem aufgehängt und an ihrem unteren Ende an Schwenkstreben befestigt, die vor dem Auswerfen des Ballens nach oben geschwenkt werden. Dazu kann ein separater Antrieb vorgesehen sein oder die Schwenkstreben sind über Seilzüge mechanisch mit dem Träger des Trägers gekoppelt. Während ein Rollo auf einer oberen Welle aufgewickelt wird, hängt eine Plane in bei nach oben geschwenkten Schwenkstreben nach unten durch.

Ein Nachteil der bekannten Schutzvorrichtung liegt darin, dass das Material beim Aufwickeln oder Zusammenfalten einem beträchtlichen Verschleiß unterliegt. Insbesondere Planen aus üblichem Kunststoffmaterial, wie sie beispielsweise als Abdeckung des Laderaums an Lastwagen verwendet werden, bilden schnell unschöne Falten, an denen sie später reißen.

Abdeckelemente aus Kunststofffasern per se sind aus den Dokumenten US 2006/0154542 A1, DE 20 2006 008 868 U1, WO 2003/104537 A1 und US 3 470 928 A bekannt.

Das der Erfindung zugrunde liegende Problem wird darin gesehen, eine Rundballenpresse bereitzustellen, bei der die oben erwähnten Nachteile nicht oder in einem verminderten Maß vorliegen.

Dieses Problem wird erfindungsgemäß durch die Lehre der Patentansprüche 1 und 8 gelöst, wobei in den weiteren Patentansprüchen Merkmale aufgeführt sind, die die Lösung in vorteilhafter Weise weiterentwickeln.

Eine Vorrichtung mit einem flächigen Abdeckelement aus einem in sich flexiblen Material dient zur Abdeckung des Ballenpressraums einer Rundballenpresse. Das Abdeckelement ist mit seinem oberen Ende an einer oberen Halterung und mit seinem unteren Ende an einer Strebe angebracht, die zwischen einer unteren, geschlossenen Position und einer oberen, zum Auswurf eines Rundballens geöffneten, oberen Position bewegt werden kann. Das Abdeckelement ist ein Gewebe aus Kunststofffasern. Um die Stabilität der Vorrichtung zu verbessern, werden mehrere Streben verwendet, die im Abstand voneinander mit dem Element gekoppelt sind. Dadurch kann man auch erreichen, dass das Element in der geschlossenen Position ein Vieleck bildet, dessen Umriss sich an den etwa zylindrischen Ballenpressraum anschließt. Um die Rundballenpresse nicht nur nach hinten, sondern auch zur Seite hin abzudecken, sind die Streben U-förmig geformt, d. h. mit drei Schenkeln ausgestattet, und das Abdeckelement liegt an allen drei Schenkeln der Strebe an.

Die Verwendung eines Gewebes aus Kunststofffasern als Abdeckelement stellt eine lange Lebensdauer des Abdeckelements sicher, denn Gewebe lassen sich leichter zusammenfalten oder aufrollen als einstückige, flächige Materialien wie Planen und erleiden dabei auch weniger Schäden. Auf diese Weise werden eine hohe Lebensdauer des Abdeckelements und ein geringer Antriebsleistungsbedarf für die Bewegung des Abdeckelements erzielt.

Ein bevorzugtes Material für das Gewebe ist Polypropylen. Eine geeignete Fadenstärke ist 1000 den, wobei sich der einzelne Faden aus mehreren Filamenten zusammensetzt. Die Herstellung des Gewebes kann insbesondere mittels einer Raschelmaschine erfolgen. Ein geeignetes Gewebe ist von der Firma Agripool S.r.l., Desenzano d/G, Italien, unter der Bezeichnung Agri Cow verfügbar.

Weiterhin ist das Gewebe vorzugsweise luftdurchlässig. Dadurch erreicht man, dass im Innenraum der Ballenpresse durch den rotierenden Ballen und die Emtegutaufnahmeeinrichtung erzeugte Luftströme problemlos abfließen können. Auch verhindert man eine unerwünschte Windanfälligkeit des Abdeckelements, insbesondere im zusammengefalteten Zustand.

Die Anbindung des Gewebes an die Strebe oder Streben kann durch eine Schlaufe des Gewebes erfolgen, in welche die Strebe eingeschoben wird. Das Material des Gewebes kann an der Schlaufe durch eine Naht oder eine Klebeverbindung oder eine Schweißverbindung verbunden werden. Es sind aber auch beliebige andere Fixierungsmöglichkeiten denkbar, wie durch Löcher im Gewebe hindurch geführte Bindeelemente (wie Schlauchschellen, Kabelbinder und dgl.) oder direkte Verbindungen zwischen der Strebe und dem Gewebe, wie eine Klebeverbindung.

Das Abdeckelement kann aus einem einteiligen Gewebe bestehen, oder aus mehreren Teilen, die vorzugsweise im Bereich einer oder mehrerer Streben miteinander gekoppelt sind. Dazu kann ebenfalls eine Naht- oder Klebeverbindung vorgesehen sein, oder die Teile sind durch Reißverschlüsse oder mechanische Verbindungselemente untereinander verbunden. So könnten die Streben oder damit verbundene Verbindungselemente mit Ausbuchtungen versehen sein, in die eine Schlaufe des Abdeckelements eingelegt und durch einen in die Schlaufe eingeführten Stab dort festgehalten werden.

Um die Rundballenpresse nicht nur nach hinten, sondern auch zur Seite hin abzudecken, bietet es sich an, die Strebe oder Streben U-förmig zu formen, d. h. mit drei Schenkeln auszustatten, und das Abdeckelement an allen drei Schenkeln der Strebe anliegen zu lassen.

Das Abdeckelement kann starr an der ebenfalls unbeweglich mit der Ballenpresse verbundenen oberen Halterung angebracht werden, so dass es bei einer in die obere Position verbrachten Strebe nach unten bzw. hinten durchhängt. Die Strebe oder Streben werden um eine Achse nach oben verschwenkt oder linear nach oben verfahren. Es wäre aber auch denkbar, die Halterung mit einer Welle auszustatten, auf welcher das Abdeckelement nach Art eines Rollos aufgewickelt wird.

Die beschriebene Vorrichtung eignet sich besonders für eine Rundballenpresse mit einem Ballenpressraum und einem Pressmittel, das von einem zum Entladen eines Ballens verstellbaren Träger abgestützt wird. Eine derartige Rundballenpresse ist an sich aus der DE 102 50 425 A1 bekannt. Die Vorrichtung deckt den Ballenpressraum nach hinten ab, um die Unfallgefahr zu vermindern und den Ballenpressraum gegenüber Umwelteinflüssen abzuschirmen.

Bei einer bevorzugten Ausführungsform ist die (einzige oder unterste) Strebe in der unteren, geschlossenen Position am Rahmen der Rundballenpresse verriegelt, um eine unerwünschte Öffnung des Abdeckelements zu vermeiden. Der Träger öffnet während einer Bewegung zum Entladen eines Ballens zuerst die Verriegelung und transportiert anschließend die Strebe in die obere Position. Dadurch erspart man sich einen eigenen Antrieb für die Strebe. Nach dem Auswurf eines fertigen Ballens geht der Träger wieder in seine Ballenbildungsposition zurück. Die Strebe gelangt dann allein durch die Schwerkraft in die untere, geschlossene Position und wird dort selbsttätig verriegelt. Dadurch vermeidet man Beschädigungen der Vorrichtung zur Abdeckung des Ballenpressraums, falls sich unter ungünstigen Umständen noch ein Ballen in ihrem Bewegungsbereich befinden sollte. Die Schwenkachsen des Trägers und der Strebe oder Streben sind vorzugsweise koaxial, sie können aber auch im Abstand voneinander angeordnet sein. Diese Ausführungsform ist nicht auf Abdeckelemente aus einem Gewebe aus Kunststofffasern beschränkt, sondern kann mit Abdeckelementen aus beliebigen Materialien verwendet werden.

In den Zeichnungen ist ein nachfolgend näher beschriebenes Ausführungsbeispiel der Erfindung dargestellt. Es zeigt:
- Fig. 1: eine schematische Seitenansicht einer Rundballenpresse mit einer Vorrichtung zur Abdeckung des Ballenpressraums in einem leicht gefüllten Betriebszustand,
- Fig. 2: die Rundballenpresse nach Figur 1 in einem gefüllten Zustand,
- Fig. 3: die Rundballenpresse nach Figur 1 während des Entladevorgangs,
- Fig. 4: eine seitliche Ansicht der Vorrichtung zur Abdeckung des Ballenpressraums,
- Fig. 5: eine vergrößerte Darstellung der Verriegelung der Vorrichtung zur Abdeckung des Ballenpressraums, und
- Fig. 6: eine von vorn betrachtete, perspektivische Ansicht der Vorrichtung zur Abdeckung des Ballenpressraums.

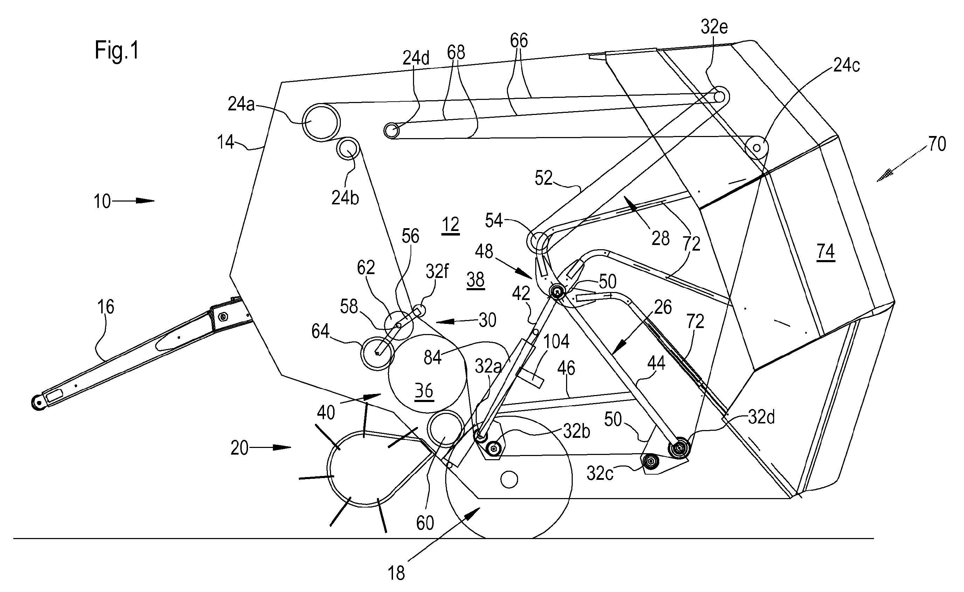

In der Figur 1 ist eine Ausführungsform einer Rundballenpresse 10 dargestellt, die einen Rahmen 14 aufweist, der sich auf einem Fahrwerk 18 abstützt. An der Vorderseite des Rahmens 14 ist eine Deichsel 16 angeordnet, um die Rundballenpresse 10 an einem Traktor anhängen und über ein Feld ziehen zu können. Eine Aufnahmevorrichtung 20 in Form einer Pick-Up dient zur Aufnahme von auf dem Boden liegenden Erntegut, z. B. in einem Schwad abgelegten Heu oder Stroh. Das von der Aufnahmevorrichtung 20 aufgenommene Erntegut wird dem Einlass eines Ballenpressraums 12 zugeführt und dort spiralförmig zu einem rundzylindrischen Ballen 36 aufgerollt, gebunden und anschließend auf den Boden abgelegt.

Am Einlass 40 des Ballenpressraums 20 sind eine untere, stationäre Rolle 60 und zwei obere Rollen 62, 64 positioniert. Der Ballenpressraum 12 wird weiterhin durch ein endloses Pressmittel 34 in Form eines Riemens gebildet, der um eine Anzahl von ortsfesten Drehkörpern 24 und bewegbaren Drehkörpern 32 geführt wird. Während der Ballenpressraum 12 umfangsseitig im Wesentlichen von dem Pressmittel 34 umgeben wird, wird er seitlich von Seitenwänden 38 geschlossen.

Vier der Drehkörper 32a, 32b, 32c und 32b sind jeweils paarweise am Ende eines deltaförmigen Trägers 26 frei drehbar gelagert, der mit einem ersten Schenkel 42 und einem zweiten Schenkel 44 ausgebildet ist, die mittels einer Strebe 46 untereinander verbunden sind. Der erste und der zweite Schenkel 42 und 44 treffen sich in einem Lager 48, das auf einem Lagerteil 50 an der Außenseite der Seitenwand 38 aufgenommen wird. Der Lagerteil 50 befindet sich direkt im oder nahe dem Zentrum des Ballenpressraums 12 bzw. der Seitenwand 38. Auf jeder Seite der Rundballenpresse 10 ist ein Träger 26 und ein Lagerteil 50 vorgesehen, und zwar jeweils an der Außenseite der Seitenwand 38.

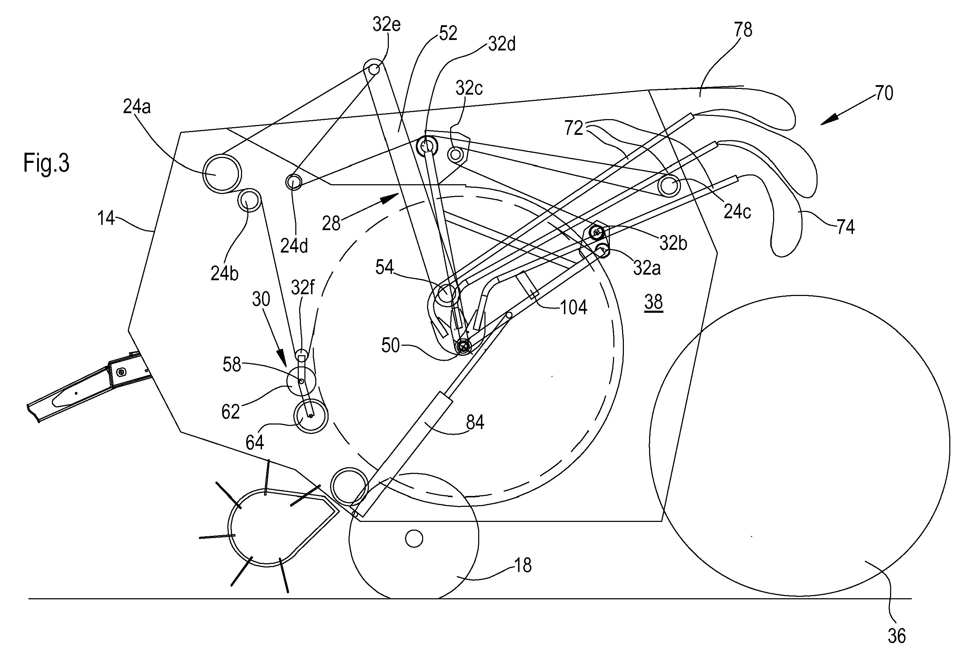

Die Verstellung des Trägers 26 erfolgt über einen Stellmotor 84, der insbesondere in Form eines Hydraulikzylinders realisiert sein kann. Der Träger 26 kann zwischen zwei Endstellungen schwenken, nämlich einer unteren, in der sich die Drehkörper 32a bis 32d im wesentlichen nahe einer horizontalen Ebene unterhalb des Ballenpressraums 12 befinden, und einer um nahezu 180 Grad nach oben versetzten Stellung, in der die Drehkörper 32c, 32d des zweiten Schenkels 44 zwischen dem dazwischen gelegenen und dem hinteren ortsfesten Drehkörper 24d und 24c zu liegen kommen - vgl. Figur 3.

Ein Spannmechanismus 28 zur Straffung des Pressmittels 34 umfasst einen Spannarm 52, einen an dem radial außen liegenden Endbereich des Spannarms 52 beweglich angeordneten Drehkörper 32e und ein nicht gezeigtes Spannelement. Der Spannarm 52 ist im Bereich der Seitenwände 38 oberhalb und vor dem Lagerteil 50 vertikal schwenkbar in einem Lager 54 gelagert und erstreckt sich bis über die Ebene, um die die ortsfesten oberen Drehkörper 24 angeordnet sind. Das Spannelement ist in üblicher Weise als eine mechanische Feder oder als ein Hydraulikmotor ausgebildet, der gegen einen evtl. veränderbaren Widerstand bewegbar ist. Ein solcher Widerstand kann mittels einer vorzugsweise verstellbaren Drossel in einem Hydraulikkreis aufgebaut werden, wie dies an sich bekannt ist. Das Maß des Widerstands bestimmt zugleich die Dichte und das maximale Gewicht des Ballens 36.

Die oberen Rollen 62, 64 und der Drehkörper 32f sind an einem schwenkbaren Träger 30 befestigt, der einen Rahmen 56 umfasst, welcher in seinem Mittenbereich vertikal schwenkbar um eine Schwenkachse 58 gelagert ist. Der Drehkörper 32f und die Rollen 62, 64 sind frei drehbar in dem Rahmen 56 gelagert, wobei die Rolle 62 koaxial zu der Schwenkachse 58 verläuft. Der Rahmen 56 kann mittels eines Spannelements in eine bestimmte Stellung vorgespannt werden.

Das Pressmittel 34 verläuft unter anderem über die ortsfesten Drehkörper 24 und die beweglichen Drehkörper 32 und wird mittels des Spannmechanismus 28 stets so fest an wenigstens einem drehbar angetriebenen ortsfesten Drehkörper 24 angelegt, dass seine Mitnahme gewährleistet ist. Das Pressmittel 34 nimmt einen Anfangszustand ein, in dem es gerade gestreckt den Einlass 40 überbrückt, und einen Endzustand, in dem es sich wie eine große Schlaufe um den Ballen 36 schlingt. Der Ballenpressraum 12 ist somit in seiner Größe veränderlich, d. h. sein Durchmesser nimmt mit der Größe des Ballens 36 zu. Der Ballen 36 befindet sich während seiner Bildung in dem Ballenpressraum 12 und wird von dem Pressmittel 34 größtenteils umschlungen, fällt aber aus dem Ballenpressraum 12, d. h. dem Raum zwischen den Seitenwänden 38, auf den Boden, sobald - wie später beschrieben wird - der Träger 26 mit den beweglichen Drehkörpern 32 mit Blick auf die Zeichnung entgegen dem Uhrzeigerdrehsinn nach oben schwenkt.

Die Seitenwände 38 könnten quer zur Fahrtrichtung beweglich gelagert sein, damit sie beim Auswerfen des Ballens 36 dessen Anlagekraft an ihrer Innenseite reduzieren, so dass dieser leichter und somit schneller austritt. Es würde z. B. bereits ausreichen, wenn die Seitenwände 38 um wenige Zentimeter voneinander entfernt würden. Die Seitenwände 38 könnten mit den Trägern 26 beweglich ausgebildet werden.

Die Funktion der Rundballenpresse 10 ist folgendermaßen: Solange der Rundballenpresse 10 kein Gut zugeführt wird und der Ballenpressraum 12 leer ist, befindet sich der Träger 26 in seiner unteren, vorderen Endstellung, in der sich der erste, vordere Drehkörper 32a an dem ersten Schenkel 42 nahe der Rolle 60 befindet und sich die Drehkörper 32a - 32d nahe einer im wesentlichen horizontalen Ebene befinden. Der Spannarm 52 wird nach hinten gedrängt. Der schwenkbare Träger 30 nimmt seine im Uhrzeigerdrehsinn weitest mögliche Endstellung ein. Ein Abschnitt des Pressmittels 34 erstreckt über die Innenseiten der Rollen 60 und 64 und verschließt somit den Einlass 40. Dieser Zustand ist in Figur 1 gezeigt.

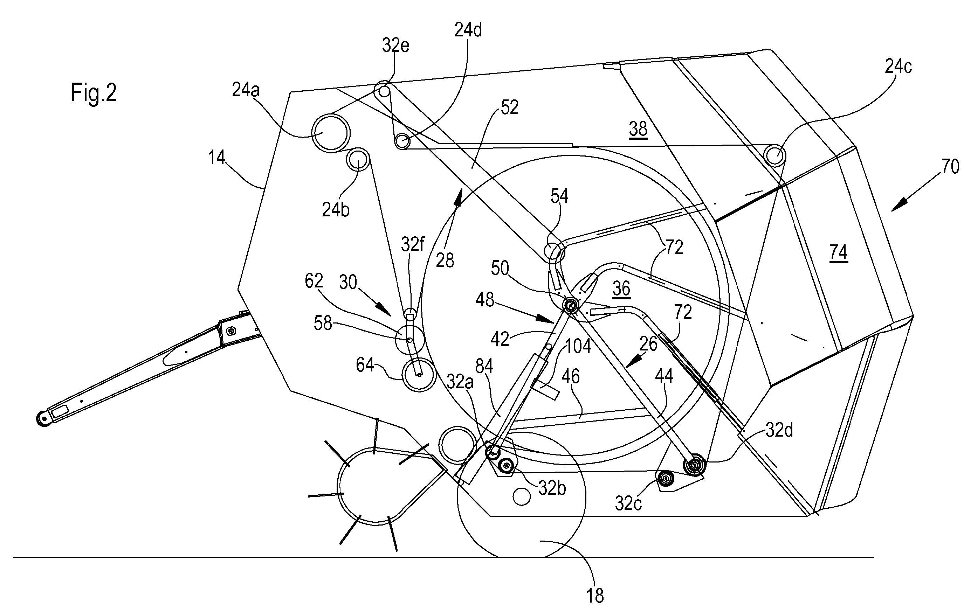

Sobald über die Aufnahmevorrichtung 20 Erntegut in den Ballenpressraum 12 gefördert wird, wird es den Abschnitt des Pressmittels 34 zum Innern des Ballenpressraums 12 hin auslenken, was bewirkt, dass der Spannarm 52 anfängt, sich nach vorne zu bewegen, um die vom Pressmittel 34 im oberen Bereich der Rundballenpresse 10 gebildeten Schlaufen 66, 68 zu verkürzen. Ab einem bestimmten Durchmesser wird der Ballen 36 an dem Drehkörper 32f anliegen und mit ihm den schwenkbaren Träger 30 entgegen dem Uhrzeigerdrehsinn schwenken. Dabei wird sich die Rolle 64 in den Ballenpressraum 12 hinein und den Ballen 36 von dem Einlass 40 weg bewegen, so dass ankommendes Erntegut leicht angenommen werden kann. Während der Ballendurchmesser zunimmt, bleibt der Träger 26 in seiner in den Figuren 1 und 2 gezeigten Stellung.

Wenn der Ballen 36 seinen größten Durchmesser erreicht hat (s. Figur 3), hat der schwenkbare Träger 30 seine maximale Stellung entgegen dem Uhrzeigerdrehsinn und der Spannarm 52 seine vorderste Stellung eingenommen, in der die erste Schlaufe 66 ihre geringste Länge einnimmt. Der Ballen 36 ruht vorne auf der Rolle 60 und dem angrenzenden ersten Drehkörper 32a. Im Übrigen wird der Ballen 36 von der Spannung in dem Pressmittel 34 außer Kontakt mit dem ersten und dem zweiten Drehkörper 32c, 32d und den über sie verlaufenden Riemenabschnitten gehalten. Bei Bedarf kann zwischen den beiden zweiten Schenkeln 44 eine weitere nicht gezeigte Rolle vorgesehen werden, auf der sich der Ballen 36 abstützt. Wenn der Ballen 36 seine maximale Größe erreicht hat, wird aufgrund des radialen Versatzes des ersten und des zweiten Drehkörpers 32a und 32b an dem ersten Schenkel 42 verhindert, dass die einander benachbarten Trums des Pressmittels 34 aneinander anliegen. In diesem Zustand kann der Ballen 36 gebunden oder mit Folie oder Netz umwickelt werden, so dass er nach dem Austritt aus dem Ballenpressraum 12 nicht auseinander fällt.

Nachdem der Ballen 36 fertig gestellt ist, kann er aus dem Ballenpressraum 12 ausgeworfen werden, wozu der Träger 26 entgegen dem Uhrzeigerdrehsinn nach hinten und oben geschwenkt wird. Insbesondere aufgrund der Anlenkung des Trägers 26 im oder nahe dem Zentrum der Seitenwände 38 wird der Ballen 36 bereits nach einem kurzen Schwenkweg des Trägers 26 von z. B. ca. 90 Grad auf den Boden fallen. Nach einem Schwenkweg von z. B. ca. 180 Grad befindet sich der erste Drehkörper 32a an dem ersten Schenkel 42 so weit über dem Boden, dass die Rundballenpresse 10 weiter nach vorne gefahren werden kann, ohne an den Ballen 36 anzustoßen. Sobald der Ballen 36 aus dem Ballenpressraum 12 herausgerollt ist, wird der Träger 26 wieder nach unten in die in Figur 1 gezeigte Stellung geschwenkt. Auf diesem Weg wird das Pressmittel 34 wieder gespannt und somit der Spannarm 52 wieder nach hinten bewegt. Die dargestellte Ausführungsform der Ballenpresse ist in der EP 1 308 078 A1 detailliert offenbart. Andere, mögliche Ausführungsformen sind in der DE 198 51 470 A1, DE 102 41 215 A1 und der EP 1 264 531 A1 beschrieben. Die Offenbarungen dieser Dokumente werden durch Verweis mit in die vorliegenden Unterlagen aufgenommen.

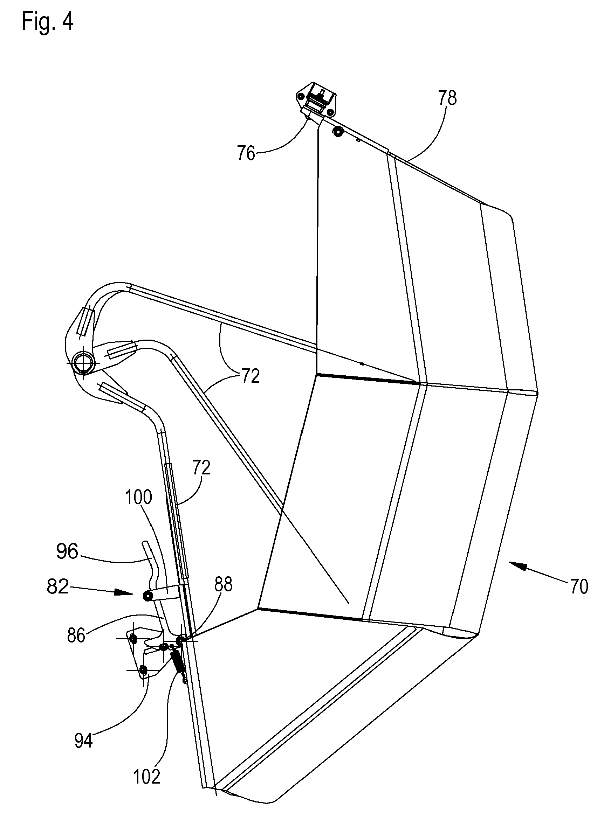

Anhand der Figuren 1 bis 3 erkennt man, dass die Rundballenpresse 10 nach hinten offen ist, damit der fertig gestellte Ballen 36 ausgestoßen werden kann. An der Rückseite der Rundballenpresse 10 befindet sich eine Vorrichtung 70 zur Abdeckung des Ballenpressraums 12. Diese Vorrichtung umfasst drei Streben 72, die jeweils insgesamt U-förmig gestaltet sind und demnach drei Schenkel umfassen. Die äußeren Schenkel sind getrennt voneinander jeweils um die Achse des Lagers 48 drehbar am Rahmen 14 angelenkt. Die in der in Figur 1 dargestellten, geschlossenen Ruheposition voneinander beabstandeten, mittleren Schenkel der Streben 72 befinden sich rückwärtig des Ballenpressraums 12 und erstrecken sich dort jeweils horizontal und quer zur Vorwärtsrichtung der Rundballenpresse 10. An den Streben 72 ist ein flächiges Abdeckelement 74 befestigt, das aus einem luftdurchlässigen Gewebe aus Kunststofffäden besteht. An seinem oberen Ende (vgl. Figur 4) ist das Abdeckelement 74 mit einer starren, U-förmigen Strebe 78 gekoppelt, die wiederum an einer starr mit dem Rahmen 14 gekoppelten Halterung 76 befestigt ist und sich näherungsweise horizontal erstreckt, wobei ihr mittlerer Schenkel sich oberhalb und rückwärtig des Ballenpressraums 12 befindet und sich dort horizontal und quer zur Vorwärtsrichtung der Rundballenpresse 10 erstreckt.

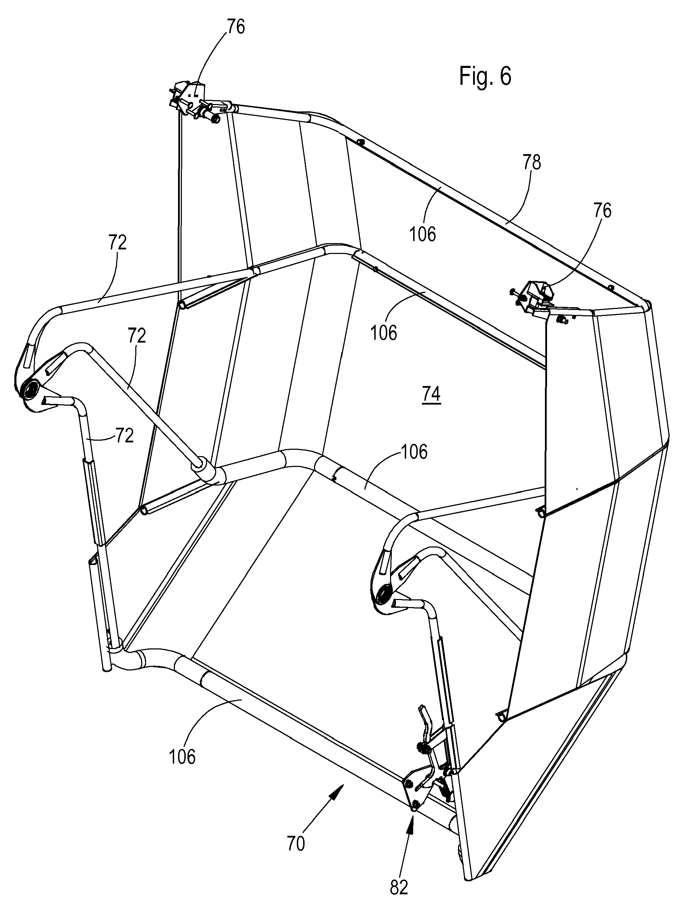

Das Abdeckelement 74 erstreckt sich entlang der mittleren Schenkel der Streben 72, 78 und auch eine gewisse Strecke entlang der äußeren Schenkel der Streben 72, 78, so dass sie in der in Figur 1 dargestellten Ruheposition bezüglich der Vorwärtsrichtung der Rundballenpresse 12 vor den rückwärtigen Konturen der Seitenwände 38 (s. Figur 3) der Rundballenpresse 12 enden und eine lückenlose Abdeckung des Ballenpressraums 12 geschaffen wird. Anhand der Figur 6 ist erkennbar, dass sich das Abdeckelement 74 aus insgesamt drei Teilen zusammensetzt, die an den Streben 72 unter Bildung von Schlaufen 106, durch welche die Streben 72 hindurchgeschoben werden, zusammengenäht sind. Auch um die Strebe 78 bildet das Abdeckelement 74 eine vernähte Schlaufe 106, in welche die Strebe 78 einschiebbar ist.

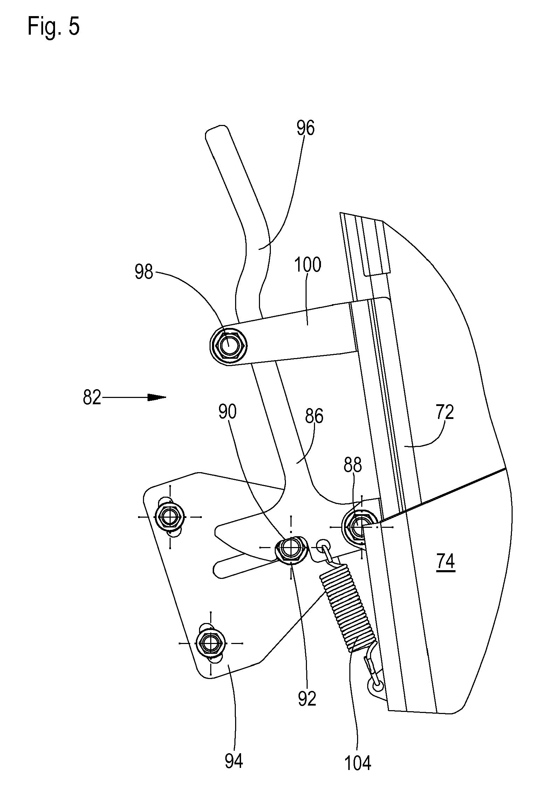

In den Figuren 4 und 5 ist eine Verriegelung 82 der untersten Strebe 72 dargestellt. Die Verriegelung 82 umfasst einen Riegelhebel 86, der um eine sich horizontal und quer zur Vorwärtsrichtung der Rundballenpresse 10 erstreckende Achse 88 schwenkbar an der untersten Strebe 72 angelenkt ist. Der Riegelhebel 86 umfasst eine Ausbuchtung 90, in die in der verrasteten Position ein Stift 92 eingreift, der seinerseits an einer starr am Rahmen 14 der Rundballenpresse 10 fixierten Platte 94 befestigt ist. In der verrasteten Stellung liegt ein oberer Hebelarm 96 des Riegelhebels 86 an einem Anschlag 98 an, der über eine Halterung 100 an der untersten Strebe 72 befestigt ist. Eine Feder 102 spannt den Riegelhebel 86 in die dargestellte Rastposition vor, in welcher der Stift 92 sich in der Ausbuchtung 90 befindet und der Hebelarm 96 am Anschlag 98 anliegt. Am ersten Schenkel 42 des Trägers 26 ist ein Mitnehmer 104 angebracht, der sowohl am Hebelarm 96 als auch an der untersten Strebe 76 zum Anliegen kommen kann, um bei einer Bewegung des Trägers 26 um die Achse des Lagers 48 zuerst die Verriegelung 82 zu lösen und anschließend die unterste Strebe 72 und sukzessive die anderen Streben 72 und mit ihnen das Abdeckelement 74 anzuheben, wie in der Figur 3 dargestellt. Der Mitnehmer 104 kann ein Dämpfungselement aus Gummi oder einem anderen geeigneten Material umfassen, um eine weiche Auslösung der Verriegelung 82 und ein weiches Anheben der untersten Strebe 72 zu erreichen. Ein derart wirkendes Dämpfungselement könnte alternativ oder zusätzlich am Hebelarm 96 und/oder an der Strebe 72 befestigt sein.

Nach alledem ist die Funktionsweise der Vorrichtung 70 zur Abdeckung des Ballenpressraums 12 folgendermaßen. In der in den Figuren 1 und 2 dargestellten Ruheposition ist die Verriegelung 82 arretiert, sodass auch die Streben 72 und das Abdeckelement 74 arretiert sind und den Ballenpressraum 12 nach hinten hin abdecken. Die Ruheposition wird während der Bildung eines Ballens im Ballenpressraum 12 beibehalten. Wird nach der Fertigstellung eines Ballens der Träger 26 durch den Stellmotor 84 um die Achse des Lagers 48 verschwenkt, kommt der Mitnehmer 104 zuerst am Hebelarm 96 zum Anliegen und dreht ihn bezüglich der Figuren 4 und 5 im Uhrzeigersinn um die Achse 88. Dadurch gerät die Ausbuchtung 90 außer Eingriff des Stifts 92. Die Verriegelung 82 ist somit gelöst. Der Mitnehmer 104 drückt bei der Weiterbewegung des Trägers 26 den Hebelarm 96 gegen die Strebe 72 (und/oder der Mitnehmer 104 greift direkt an der Strebe 72 an). Dadurch wird zunächst die unterste Strebe 72 um die Achse der Lagerung 48 bezüglich der Figuren 1 bis 3 im Gegenuhrzeigersinn gedreht. Anschließend wird durch die Wirkung des Mitnehmers 104 und der unteren Strebe 72 auch die nach oben folgende Strebe 72 und schließlich die oberste Strebe 72 um die Achse der Lagerung 48 gedreht, bis die in der Figur 3 dargestellte Endposition erreicht ist, in welcher das Abdeckelement 74 insgesamt drei nach außen und unten gerichtete Durchhänge bildet. Wird der Träger 26 nach dem Auswurf des Ballens 36 wieder nach unten verschwenkt, bewirkt ausschließlich die Schwerkraft ein Absinken der Streben 72 und des Abdeckelements 74. Dadurch wird eine Beschädigung verhindert, falls sich noch ein Ballen 36 im Bewegungsbereich der Vorrichtung 70 zur Abdeckung des Ballenpressraums 12 befinden sollte. Schließlich gelangt der Riegelhebel 86 wieder in die in der Figur 5 dargestellte Position, in welcher er die Vorrichtung 70 am Rahmen 14 der Rundballenpresse 10 arretiert.

## Patentansprüche

1. Vorrichtung (70) zur Abdeckung eines Ballenpressraums (12) einer Rundballenpresse (10), mit einem flächigen Abdeckelement (74) aus einem in sich flexiblen Gewebe, das sich zwischen einer oberen Halterung (76) und einer zwischen einer unteren, geschlossenen Position und einer oberen, zum Auswurf eines Rundballens (36) geöffneten Position beweglichen Strebe (72) erstreckt, **dadurch gekennzeichnet, dass** das Abdeckelement (74) aus einem Gewebe aus Kunststofffasern besteht, dass die Vorrichtung (70) mehrere, getrennt voneinander bewegliche Streben (72) umfasst, die im Abstand voneinander mit dem Abdeckelement (74) gekoppelt sind, dass die Streben (72) U-förmig sind, und dass das Abdeckelement (74) an allen drei Schenkeln der Streben (72) anliegt.

2. Vorrichtung (70) nach Anspruch 1, **dadurch gekennzeichnet, dass** das Gewebe luftdurchlässig ist.

3. Vorrichtung (70) nach einem der vorhergehenden Ansprüche, **dadurch gekennzeichnet, dass** das Gewebe durch eine vorzugsweise vernähte Schlaufe (106), durch die sich die Strebe (72) erstreckt, mit der Strebe (72) verbunden ist.

4. Vorrichtung (70) nach einem der Ansprüche 1 bis 3, **dadurch gekennzeichnet, dass** das Abdeckelement (74) einteilig ist oder aus mehreren Teilen besteht, die im Bereich der Streben (72) untereinander verbunden sind.

5. Vorrichtung (70) nach Anspruch 4, **dadurch gekennzeichnet, dass** die einzelnen Teile des mehrteiligen Abdeckelements (74) durch Nahtverbindungen und/oder Reißverschlüsse und/oder Verklebungen und/oder mechanische Verbindungselemente untereinander verbunden sind.

6. Vorrichtung (70) nach einem der vorhergehenden Ansprüche, **dadurch gekennzeichnet, dass** die obere Halterung (78) und der daran befestigte Bereich des Abdeckelements (74) unbeweglich mit der Rundballenpresse (10) verbunden ist, und dass das Abdeckelement (74) bei in die obere Position verbrachter Strebe (72) einen Durchhang bildet.

7. Vorrichtung (70) nach einem der vorhergehenden Ansprüche, **dadurch gekennzeichnet, dass** die Strebe (72) oder Streben (72) um eine Achse verschwenkbar sind.

8. Rundballenpresse (10) mit einem Ballenpressraum (12), einem Pressmittel, das von einem zum Entladen eines Ballens (36) verstellbaren Träger (26) abgestützt wird, und einer Vorrichtung (70) nach einem der vorhergehenden Ansprüche.

9. Rundballenpresse (10) nach Anspruch 8, **dadurch gekennzeichnet, dass** die Strebe (72) in der unteren, geschlossenen Position am Rahmen (14) der Rundballenpresse (10) verriegelt ist, dass der Träger (26) während einer Bewegung zum Entladen eines Ballens (36) zuerst die Verriegelung (82) öffnet und anschließend die Strebe (72) in die obere Position verbringt, und dass die Strebe (72) bei anschließend wieder in die Ballenbildungsposition verbrachtem Träger (26) allein durch die Schwerkraft in die untere, geschlossene Position gelangt und dort selbsttätig verriegelt wird.

## Claims

1. Device (70) for covering a baling chamber (12) of a round baler (10), having an extensive cover element (74) made of an inherently flexible fabric that extends between an upper holder (76) and a strut (72) that is movable between a lower, closed position and an upper, open position for ejecting a round bale (36), **characterized in that** the cover element (74) consists of a fabric made of plastics fibres, **in that** the device (70) comprises a plurality of struts (72) that are movable separately from one another and are coupled to the cover element (74) at a distance from one another, **in that** the struts (72) are U-shaped, and **in that** the cover element (74) rests against all three legs of the struts (72).

2. Device (70) according to Claim 1, **characterized in that** the fabric is permeable to air.

3. Device (70) according to either of the preceding claims, **characterized in that** the fabric is connected to the strut (72) by a preferably stitched loop (106) through which the strut (72) extends.

4. Device (70) according to one of Claims 1 to 3, **characterized in that** the cover element (74) is in one part or consists of several parts which are connected together in the region of the struts (72).

5. Device (70) according to Claim 4, **characterized in that** the individual parts of the multipart cover element (74) are connected together by seams and/or zips and/or adhesive bonds and/or mechanical connecting elements.

6. Device (70) according to one of the preceding claims, **characterized in that** the upper holder (78) and that region of the cover element (74) that is fastened thereto is connected immovably to the round baler (10), and **in that** the cover element (74) forms a sag when the strut (72) has been moved into the upper position.

7. Device (70) according to one of the preceding claims, **characterized in that** the strut (72) or struts (72) is/are pivotable about an axis.

8. Round baler (10) having a baling chamber (12), a compression means which is supported by a carrier (26) that is adjustable in order to discharge a bale (36), and a device (70) according to one of the preceding claims.

9. Round baler (10) according to Claim 8, **characterized in that** the strut (72) is locked to the frame (14) of the round baler (10) in the lower, closed position, **in that**, during a movement for discharging a bale (36), the carrier (26) first of all opens the lock (82) and subsequently moves the strut (72) into the upper position, and **in that**, with the carrier (26) subsequently moved back into the bale forming position, the strut (72) passes into the lower, closed position by gravity alone and is automatically locked in said position.

## Revendications

1. Dispositif (70) pour recouvrir un espace de presse à balles (12) d'une presse à balles rondes (10), comprenant un élément de recouvrement plat (74) constitué d'un tissu flexible en soi qui s'étend entre une fixation supérieure (76) et un montant (72) déplaçable entre une position inférieure fermée et une position supérieure ouverte pour éjecter une balle ronde (36), **caractérisé en ce que** l'élément de recouvrement (74) se compose d'un tissu constitué de fibres de plastique, **en ce que** le dispositif (70) comprend plusieurs montants (72) déplaçables séparément les uns des autres qui sont accouplés à distance les uns des autres à l'élément de recouvrement (74), **en ce que** les montants (72) sont en forme de U et **en ce que** l'élément de recouvrement (74) s'applique au niveau de toutes les trois branches des montants (72).

2. Dispositif (70) selon la revendication 1, **caractérisé en ce que** le tissu est perméable à l'air.

3. Dispositif (70) selon l'une quelconque des revendications précédentes, **caractérisé en ce que** le tissu est connecté au montant (72) par une boucle de préférence cousue (106) à travers laquelle s'étend le montant (72).

4. Dispositif (70) selon l'une quelconque des revendications 1 à 3, **caractérisé en ce que** l'élément de recouvrement (74) est réalisé d'une seule pièce ou se compose de plusieurs parties qui sont connectées les unes aux autres dans la région des montants (72).

5. Dispositif (70) selon la revendication 4, **caractérisé en ce que** les parties individuelles de l'élément de recouvrement en plusieurs parties (74) sont connectées les unes aux autres par des connexions cousues et/ou par des fermetures à glissière et/ou par collage et/ou par des éléments de connexion mécaniques.

6. Dispositif (70) selon l'une quelconque des revendications précédentes, **caractérisé en ce que** la fixation supérieure (78) et la région de l'élément de recouvrement (74) fixée à celle-ci sont connectées de manière non déplaçable à la presse à balles rondes (10), et **en ce que** l'élément de recouvrement (74), lorsque le montant (72) est amené dans la position supérieure, forme un affaissement.

7. Dispositif (70) selon l'une quelconque des revendications précédentes, **caractérisé en ce que** le montant (72) ou les montants (72) peut ou peuvent pivoter autour d'un axe.

8. Presse à balles rondes (10) comprenant un espace de presse à balles (12), un moyen de presse qui est supporté par un support (26) pouvant être déplacé pour décharger une balle (36), et un dispositif (70) selon l'une quelconque des revendications précédentes.

9. Presse à balles rondes (10) selon la revendication 8, **caractérisée en ce que** le montant (72) est verrouillé dans la position inférieure fermée sur le cadre (14) de la presse à balles rondes (10), **en ce que** le support (26), pendant un déplacement en vue du déchargement d'une balle (36), ouvre d'abord le verrouillage (82) puis amène le montant (72) dans la position supérieure et **en ce que** le montant (72), lorsque le support (26) est ensuite à nouveau ramené dans la position de formation de balles, parvient simplement sous l'effet de la force de gravité dans la position inférieure fermée et y est verrouillé automatiquement.
